# EUROPEAN PATENT APPLICATION

(11) **EP 4 590 059 A1**
(43) Date of publication of application: **23.07.2025**
(21) Application number: 23884553.1
(22) Date of filing: 09.10.2023
(51) Int. Cl.: H04W 74/08

(54) **METHOD FOR COMMUNICATION, DEVICE, STORAGE MEDIUM AND PROGRAM PRODUCT**

(30) Priority: 03.11.2022 CN 202211371604
(71) Applicant: Huawei Technologies Co., Ltd., Shenzhen, Guangdong 518129 (CN)
(72) Inventor: YANG, Ruonan, Shenzhen, Guangdong 518129 (CN); CHEN, Ying, Shenzhen, Guangdong 518129 (CN); ZHAO, Feiran, Shenzhen, Guangdong 518129 (CN); WANG, Jun, Shenzhen, Guangdong 518129 (CN)
(74) Representative: Epping - Hermann - Fischer
(86) International application number: PCT/CN2023/123602
(87) International publication number: WO 2024/093621

(57) **Abstract**

Embodiments of this disclosure provide a communication method, a terminal device, a network device, a computer-readable storage medium, and a computer program product. In the method, a first communication apparatus receives a first threshold, where the first threshold is used to determine whether acknowledgment information of a message 4 (Msg4) in a random access procedure between the first communication apparatus and a second communication apparatus is repeatedly transmitted; and the first communication apparatus performs the random access procedure based on the first threshold. In this way, a transmission quantity of the acknowledgment information of the Msg4 is controlled based on the first threshold, to save transmission resources and provide high flexibility for transmission of the acknowledgment information of the message 4.

## Description

### TECHNICAL FIELD

This disclosure generally relates to the field of telecommunications, and more specifically, to a communication method, a terminal device, a network device, a computer-readable storage medium, and a computer program product.

### BACKGROUND

In a contention-based random access procedure of mobile communication, there are four messages exchanged between a terminal device and a network device: a random access (Random Access) preamble (Preamble) sequence, namely, a message 1 (Msg1), a random access response (Random Access Response), namely, a message 2 (Msg2), a radio resource control request (Radio Resource Control Request), namely, a message 3 (Msg3), and a contention resolution message, namely, a message 4 (Msg4). After receiving a physical downlink shared channel (Physical Downlink Shared Channel, PDSCH) carrying the Msg4, the terminal device may send a hybrid automatic repeat request acknowledgement (Hybrid Automatic Repeat request Acknowledgement, HARQ-ACK), namely, a message 5 (Msg5), as acknowledgment information of the message 4. The Msg5 may be transmitted through a physical uplink control channel (Physical Uplink Control Channel, PUCCH). However, there is a need to provide an appropriate manner to protect transmission of the Msg5.

### SUMMARY

This application provides a technical solution for repeat transmission of a message in a random access procedure, to protect acknowledgment information of a message 4 by using different repeat transmission quantities based on different thresholds, so as to save transmission resources, simplify signaling design, reduce signaling overheads, and provide sufficient control flexibility.

According to a first aspect, a communication method is provided. The method may be performed by a terminal device or a chip used in a terminal device. The following provides descriptions by using an example in which the method is performed by the terminal device. In the method, a first communication apparatus, for example, the terminal device, receives a first threshold, where the first threshold is used to determine whether acknowledgment information of a message 4 (Msg4) in a random access procedure between the first communication apparatus and a second communication apparatus is repeatedly transmitted. Further, the first communication apparatus performs the random access procedure based on the first threshold. In this way, a transmission quantity of a Msg5 is controlled based on the first threshold, to save transmission resources and provide high flexibility for transmission of the Msg5.

A person of ordinary skill in the art may understand that, the foregoing communication method may also be performed by a network device or a chip of a network device, for example, a network device that functions as a relay (Relay), that sends a Msg1, a Msg3, or a Msg5 in the random access procedure. This is not limited in this disclosure. The same rule applies to the following terminal devices, and details are not described herein in this disclosure.

In some implementations, the first threshold is less than a second threshold, and the second threshold is used to determine whether a message 3 (Msg3) in the random access procedure is repeatedly transmitted. In this way, a transmission quantity request for the Msg3 and a transmission quantity request for the Msg5 are separated, to adapt to a feature that the Msg3 and the Msg5 have different thresholds, save transmission resources, and provide high flexibility for transmission of the Msg3 and the Msg5.

In some implementations, that the first communication apparatus performs the random access procedure includes: The first communication apparatus receives, from the second communication apparatus, a transmission quantity request mode used for the acknowledgment information of the message 4, and sends, based on the first threshold and the transmission quantity request mode, a transmission quantity request for the acknowledgment information of the message 4. In this way, the transmission quantity request for the acknowledgment information of the message 4 may be sent in a plurality of different modes, to improve system flexibility.

In some implementations, the transmission quantity request mode includes at least one of the following: sending a preconfigured preamble sequence; scrambling the message 3 by using a preconfigured scrambling code; or performing indication in the message 3. In this way, the transmission quantity request for the acknowledgment information of the message 4 may be sent in the plurality of different modes, to improve the system flexibility.

In some implementations, the transmission quantity request mode is the sending the preconfigured preamble sequence, and that the first communication apparatus sends a transmission quantity request for the acknowledgment information of the message 4 includes: The first communication apparatus selects, based on the first threshold, a preamble sequence from a preamble sequence set indicating repetition of both the message 3 and the acknowledgment information of the message 4; and the first communication apparatus sends the selected preamble sequence. This can reduce signaling overheads, and improve transmission efficiency.

In some implementations, the preamble sequence set indicating repetition of both the message 3 and the acknowledgment information of the message 4 is any one of the following: a part of a preamble sequence set for repetition of the message 3; and a part of a reserved preamble sequence resource that does not overlap the preamble sequence set indicating repetition of the message 3. In this way, the preamble sequence set indicating repetition of both the message 3 and the acknowledgment information of the message 4 may be determined in a more flexible manner, to reserve a plurality of selection spaces for different use scenarios.

In some implementations, the transmission quantity request mode is the scrambling the message 3 by using the preconfigured scrambling code, and that the first communication apparatus sends a transmission quantity request for the acknowledgment information of the message 4 includes: The first communication apparatus selects, based on the first threshold, one of a plurality of scrambling codes to scramble the message 3; and the first communication apparatus sends a scrambled message 3. In this way, the transmission quantity request for the acknowledgment information of the message 4 may be sent without directly consuming a signaling resource of the Msg3, to improve transmission efficiency.

In some implementations, the transmission quantity request mode is the performing indication in the message 3, and that the first communication apparatus sends a transmission quantity request for the acknowledgment information of the message 4 includes: The first communication apparatus sends, in the message 3 based on the first threshold, the transmission quantity request for the acknowledgment information of the message 4. In this way, using an existing signaling resource of the message 3 maintains good compatibility with an existing system.

In some implementations, the transmission quantity request for the acknowledgment information of the message 4 includes at least one of the following: a repetition quantity of the acknowledgment information of the message 4; or a scaling factor of a repetition quantity of the acknowledgment information of the message 4 relative to a repetition quantity of the message 3. The repetition quantity of the acknowledgment information of the message 4 is directly transmitted, and information is clear. However, the scaling factor of the repetition quantity of the acknowledgment information of the message 4 relative to the repetition quantity of the message 3 is transmitted, to reduce an amount of transmitted data. Different signaling design manners provide selection flexibility.

In some implementations, that the first communication apparatus sends a transmission quantity request for the acknowledgment information of the message 4 further includes: The first communication apparatus selects, based on the first threshold, a preamble sequence from a preamble sequence set indicating repetition of both the message 3 and the acknowledgment information of the message 4; the first communication apparatus sends the selected preamble sequence; the first communication apparatus selects the one of the plurality of scrambling codes to scramble the message 3; and the first communication apparatus sends the scrambled message 3. In this way, a transmission quantity of the acknowledgment information of the message 4 may be requested for a plurality of times. For example, the transmission quantity of the acknowledgment information of the message 4 is corrected for a condition of a channel environment change, so that transmission reliability and resource utilization are considered.

In some implementations, that the first communication apparatus performs the random access procedure further includes: The first communication apparatus receives a transmission quantity indication of the acknowledgment information of the message 4 from the second communication apparatus. In this way, the first communication apparatus may receive scheduling information of the second communication apparatus, to determine an actual transmission quantity of the acknowledgment information of the message 4, thereby preventing a conflict with another communication apparatus and improving communication reliability.

In some implementations, that the first communication apparatus receives a transmission quantity indication of the acknowledgment information of the message 4 includes at least one of the following: The first communication apparatus receives, from the message 4, the transmission quantity indication of the acknowledgment information of the message 4; the first communication apparatus receives the transmission quantity indication of the acknowledgment information of the message 4 from downlink control information for scheduling the message 4; or the first communication apparatus receives the transmission quantity indication of the acknowledgment information of the message 4 from downlink control information for scheduling the message 3. In this way, the transmission quantity indication of the acknowledgment information of the message 4 may be received in a plurality of manners, to improve communication flexibility and adaptability to different radio channel environments.

In some implementations, the transmission quantity indication of the acknowledgment information of the message 4 includes at least one of the following: the repetition quantity of the acknowledgment information of the message 4; an offset of the repetition quantity of the acknowledgment information of the message 4 relative to the repetition quantity of the message 3; the scaling factor of the repetition quantity of the acknowledgment information of the message 4 relative to the repetition quantity of the message 3; or a table index including the repetition quantity of the acknowledgment information of the message 4 and the repetition quantity of the message 3. In this way, a plurality of optional data structures are provided for the transmission quantity indication of the acknowledgment information of the message 4, to improve flexibility.

According to a second aspect, a communication method is provided. The method may be performed by a network device or a chip used in a network device. The following provides descriptions by using an example in which the method is performed by the network device. In the method, a second communication apparatus, for example, the network device, determines a first threshold, where the first threshold is used to determine whether acknowledgment information of a message 4 (Msg4) in a random access procedure is repeatedly transmitted; and the second communication apparatus sends the first threshold to a first communication apparatus. In this way, repeat transmission of a Msg5 is controlled based on the first threshold, to save transmission resources and provide high flexibility for transmission of the Msg5.

A person of ordinary skill in the art may understand that, the foregoing communication method may also be performed by a terminal device or a chip of a terminal device, for example, a terminal device that functions as a relay (Relay), that receives a Msg1, a Msg3, or a Msg5 in the random access procedure. This is not limited in this disclosure. The same rule applies to the following network devices, and details are not described herein in this disclosure.

In some implementations, the first threshold is less than a second threshold, and the second threshold is used to determine whether a message 3 (Msg3) in the random access procedure is repeatedly transmitted. In this way, a transmission quantity request for the Msg3 and a transmission quantity request for the Msg5 are separated, to adapt to a feature that the Msg3 and the Msg5 have different thresholds, save transmission resources, and provide high flexibility for transmission of the Msg3 and the Msg5.

In some implementations, the second communication apparatus sends, to the first communication apparatus, a transmission quantity request mode used for the acknowledgment information of the message 4; and the second communication apparatus receives, from the first communication apparatus based on the transmission quantity request mode, a transmission quantity request for the acknowledgment information of the message 4. In this way, the transmission quantity request for the acknowledgment information of the message 4 may be received in the plurality of different modes, to improve the system flexibility.

In some implementations, the transmission quantity request mode includes at least one of the following: sending a preconfigured preamble sequence; scrambling the message 3 by using a preconfigured scrambling code; or performing indication in the message 3. In this way, the transmission quantity request for the acknowledgment information of the message 4 may be received in the plurality of different modes, to improve the system flexibility.

In some implementations, the transmission quantity request mode is the sending the preconfigured preamble sequence, and that the second notification apparatus receives a transmission quantity request for the acknowledgment information of the message 4 includes: The second communication apparatus receives, from the preamble sequence, the transmission quantity request for the acknowledgment information of the message 4. This can reduce signaling overheads, and improve transmission efficiency.

In some implementations, the transmission quantity request mode is the scrambling the message 3 by using the preconfigured scrambling code, and that the second notification apparatus receives a transmission quantity request for the acknowledgment information of the message 4 includes: The second communication apparatus descrambles a received message 3, to obtain the transmission quantity request for the acknowledgment information of the message 4. In this way, the transmission quantity request for the acknowledgment information of the message 4 may be sent without directly consuming a signaling resource of the Msg3, to improve transmission efficiency.

In some implementations, the transmission quantity request mode is the performing indication in the message 3, and the receiving a transmission quantity request for the acknowledgment information of the message 4 includes: The second communication apparatus receives, from the message 3, the transmission quantity request for the acknowledgment information of the message 4. In this way, using an existing signaling resource of the message 3 maintains good compatibility with an existing system.

In some implementations, the transmission quantity request for the acknowledgment information of the message 4 includes at least one of the following: a repetition quantity of the acknowledgment information of the message 4; or a scaling factor of a repetition quantity of the acknowledgment information of the message 4 relative to a repetition quantity of the message 3. The repetition quantity of the acknowledgment information of the message 4 is directly transmitted, and information is clear. However, the scaling factor of the repetition quantity of the acknowledgment information of the message 4 relative to the repetition quantity of the message 3 is transmitted, to reduce an amount of transmitted data. Different signaling design manners provide selection flexibility.

In some implementations, that the second communication apparatus receives a transmission quantity request for the acknowledgment information of the message 4 further includes: The second communication apparatus receives, from the preamble sequence, the transmission quantity request for the acknowledgment information of the message 4; and the second communication apparatus descrambles the received message 3, to obtain the transmission quantity request for the acknowledgment information of the message 4 for correction. In this way, a transmission quantity of the acknowledgment information of the message 4 may be requested for a plurality of times. For example, the transmission quantity of the acknowledgment information of the message 4 is corrected for a condition of a channel environment change, so that transmission reliability and resource utilization are considered.

In some implementations, the second communication apparatus further sends a transmission quantity indication of the acknowledgment information of the message 4 to the first communication apparatus based on the transmission quantity request for the acknowledgment information of the message 4. In this way, the first communication apparatus may receive scheduling information of the second communication apparatus, to determine an actual transmission quantity of the acknowledgment information of the message 4, thereby preventing a conflict with another communication apparatus and improving communication reliability.

In some implementations, that the second communication apparatus sends a transmission quantity indication of the acknowledgment information of the message 4 includes at least one of the following: The second communication apparatus sends, via the message 4, the transmission quantity indication of the acknowledgment information of the message 4; the second communication apparatus sends the transmission quantity indication of the acknowledgment information of the message 4 via downlink control information for scheduling the message 4; or the second communication apparatus sends the transmission quantity indication of the acknowledgment information of the message 4 via downlink control information for scheduling the message 3. In this way, the transmission quantity indication of the acknowledgment information of the message 4 may be sent in a plurality of manners, to improve communication flexibility and adaptability to different radio channel environments.

In some implementations, the transmission quantity indication of the acknowledgment information of the message 4 includes at least one of the following: the repetition quantity of the acknowledgment information of the message 4; an offset of the repetition quantity of the acknowledgment information of the message 4 relative to the repetition quantity of the message 3; the scaling factor of the repetition quantity of the acknowledgment information of the message 4 relative to the repetition quantity of the message 3; or a table index including the repetition quantity of the acknowledgment information of the message 4 and the repetition quantity of the message 3. In this way, a plurality of optional data structures are provided for the transmission quantity indication of the acknowledgment information of the message 4, to improve flexibility.

According to a third aspect, a communication apparatus is provided. The communication apparatus may be the terminal device in the foregoing method embodiments, or may be a chip disposed in the terminal device. The communication apparatus includes a processor and a memory. The memory is configured to store a computer program or instructions. When the processor executes the computer program or the instructions, the communication apparatus is enabled to perform the method performed by the terminal device in the foregoing method embodiments.

According to a third aspect, a communication apparatus is provided. The communication apparatus may be the network device in the foregoing method embodiments, or may be a chip disposed in the network device. The communication apparatus includes a processor and a memory. The memory is configured to store a computer program or instructions. When the processor executes the computer program or the instructions, the communication apparatus is enabled to perform the method performed by the terminal device in the foregoing method embodiments.

According to a fourth aspect, this application provides a computer-readable storage medium. The computer-readable storage medium stores a computer program. When the computer program is run, the method performed by the terminal device or the network device in the foregoing aspects is implemented.

According to a fifth aspect, a computer program product is provided. The computer program product includes computer program code. When the computer program code is run, the method performed by the terminal device or the network device in the foregoing aspects is implemented.

According to a sixth aspect, a communication system is provided. The communication system includes a first communication apparatus and a second communication apparatus. The first communication apparatus includes a processor and a memory that stores instructions, and when the instructions are executed by the processor, the terminal device is enabled to perform the method according to any one of claims 1 to 13. The second communication apparatus includes a processor and a memory that stores instructions, and when the instructions are executed by the processor, the network device is enabled to perform the method according to any one of claims 14 to 25.

### BRIEF DESCRIPTION OF DRAWINGS

FIG. 1A is a communication network in which embodiments of this application can be implemented;
FIG. 1B is a diagram of an architecture of a communication system according to an embodiment of this application;
FIG. 1C is a diagram of a random access procedure according to an embodiment of this application;
FIG. 2A is a schematic flowchart of processing a transmission quantity request for acknowledgment information of a message 4 according to an embodiment of this application;
FIG. 2B is a diagram of preamble sequence set allocation according to an embodiment of this application;
FIG. 2C is a diagram of a first threshold and a second threshold according to an embodiment of this application;
FIG. 2D is a diagram of a preamble sequence of PUCCH repetition according to an embodiment of this application;
FIG. 2E is a diagram of a preamble sequence of PUCCH repetition according to another embodiment of this application;
FIG. 2F is a diagram of scrambling of a message 3 according to an embodiment of this application;
FIG. 3 is a flowchart of a communication method implemented by a first communication apparatus according to an embodiment of this application;
FIG. 4 is a flowchart of a communication method implemented by a second communication apparatus according to an embodiment of this application;
FIG. 5 is a simplified block diagram of an example device in a possible implementation according to an embodiment of this application;
FIG. 6 is a simplified block diagram of a communication apparatus in a possible implementation according to an embodiment of this application; and
FIG. 7 is a simplified block diagram of a network device in a possible implementation according to an embodiment of this application.

### DESCRIPTION OF EMBODIMENTS

To make the objectives, technical solutions, and advantages of this application clearer, the following further describes this application in detail with reference to the accompanying drawings. Specific operation methods, function descriptions, and the like in method embodiments may also be applied to apparatus embodiments or system embodiments.

As described above, in a contention-based random access procedure of mobile communication, there are a plurality of messages exchanged between a terminal device and a network device: a random access (Random Access) preamble sequence (Preamble), namely, a message 1 (Msg1), a random access response (Random Access Response), namely, a message 2 (Msg2), a radio resource control request (Radio Resource Control Request), namely, a message 3 (Msg3), and a contention resolution message, namely, a message 4 (Msg4). After receiving a physical downlink shared channel (Physical Downlink Shared Channel, PDSCH) carrying the Msg4, the terminal device may send a hybrid automatic repeat request acknowledgement (Hybrid Automatic Repeat reQuest Acknowledgement, HARQ-ACK), namely, a message 5 (Msg5), as acknowledgment information of the message 4. The Msg5 may be transmitted through a physical uplink control channel (Physical Uplink Control Channel, PUCCH). However, there is a need to provide an appropriate manner to protect transmission of the Msg5.

To resolve the foregoing problem, embodiments disclosed in this application provide a communication method for repeat transmission of a message in a random access procedure. In the method, a first communication apparatus, for example, a terminal device, receives a first threshold, where the first threshold is used to determine whether acknowledgment information of a message 4 (Msg4) in the random access procedure between the first communication apparatus and a second communication apparatus is repeatedly transmitted. Further, the first communication apparatus performs the random access procedure based on the first threshold. In this way, a transmission quantity of a Msg5 is controlled based on the first threshold, to save transmission resources and provide high flexibility for transmission of the Msg5.

Embodiments disclosed in this application further provide a communication method for repeat transmission of a message in a random access procedure. In the method, a second communication apparatus like a network device determines a first threshold, where the first threshold is used to determine whether acknowledgment information of a message 4 (Msg4) in the random access procedure is repeatedly transmitted; and the second communication apparatus sends the first threshold to a first communication apparatus. In this way, a transmission quantity of a Msg5 is controlled based on the first threshold, to save transmission resources and provide high flexibility for transmission of the Msg5.

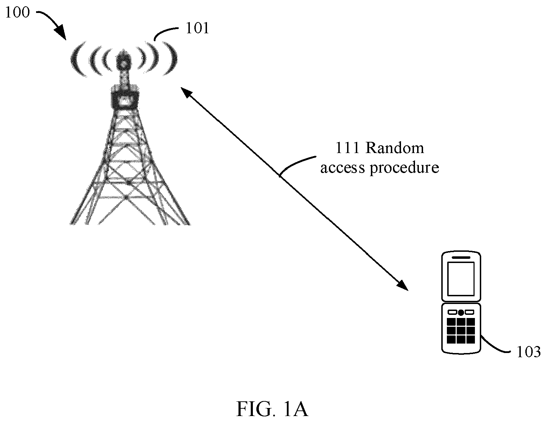

As shown in FIG. 1A, the communication methods provided in embodiments of this application may be applied to a wireless communication system 100. In the wireless communication system 100, a first communication apparatus 103, for example, a terminal device, and a second communication apparatus 101, for example, a network device, specifically, a base station, are shown. The first communication apparatus 103 completes random access to the second communication apparatus 101 by using a random access procedure 111.

With the development of information technologies, there are more urgent communication requirements for high efficiency, mobility, and diversity. At present, satellites play an irreplaceable role in some important fields such as space communication, aeronautical communication, maritime communication, and military communication.

Compared with terrestrial mobile communication networks, satellite communication can achieve wide area or even global coverage by using high-orbit, medium-orbit and low-orbit satellites, and can provide undifferentiated communication services for global users. A satellite communication system and 5G are integrated with mutual complementarity, to form a globally seamless space-air-ground-sea integrated communication network, so as to meet a plurality of ubiquitous service requirements of users. This is an important direction of communication development in the future. Convergence of satellites and 5G gives full play to advantages to provide more comprehensive and higher-quality services for users in the following aspects: (1) Satellites can provide economical and reliable network services for remote areas, aircraft, or ocean ships that cannot be covered by a 5G terrestrial network, to extend a network to areas unreachable by the terrestrial network. (2) Satellites can provide a continuous network connection service for internet of things devices and users on mobile carriers such as airplanes, ships, trains, and cars, and convergence of the satellites and 5G can greatly enhance a service capability of a 5G system in this aspect. (3) Satellites' excellent broadcast/multicast capability provides an efficient data distribution service for network edges and user terminals. Compared with an early satellite mobile communication system, development of current satellite mobile communication has two characteristics: miniaturization of mobile terminals, where a plurality of mobile communication terminals including handsets are supported; and broadbandization of communication services, where a high-speed data service and an internet multimedia communication service are further provided as well as a conventional narrowband voice service.

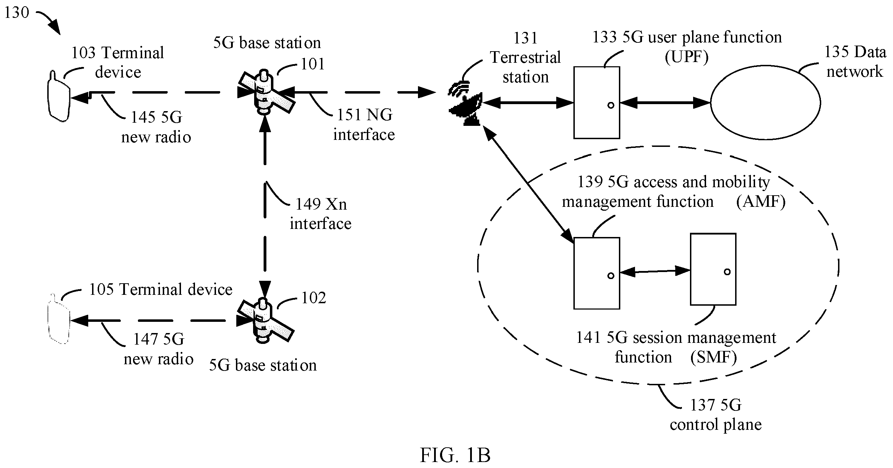

FIG. 1B is a diagram of an architecture of a communication system according to an embodiment of this application. A first communication apparatus 103, for example, a terminal device, accesses a communication network through 5G new radio 145. A second communication apparatus 101, for example, a 5G base station, is deployed on a satellite, and is connected to a terrestrial core network through a radio link, namely, an NG interface 151, and a terrestrial station 131. In addition, there is a communication link, for example, a radio link or a laser link, namely, an Xn interface 149, between the satellite-based 5G base station 101 and a satellite-based 5G base station 102 to implement signaling exchange and user data transmission between the base stations. Network elements in FIG. 1B and interfaces of the network elements are described as follows:

Terminal devices 103 and 105 are mobile devices that support 5G new radio 145 and 147, and may be mobile devices such as mobile phones and pads. The terminal device may access a satellite network through the 5G new radio and initiate services such as a call and internet access.

The 5G base stations 101 and 102 may provide radio access services, schedule radio resources for the terminal devices 103 and 105, provide a reliable radio transmission protocol and data encryption protocol, and the like.

A 5G core network is responsible for services such as user access control, mobility management, session management, user security authentication, and charging, and includes a plurality of functional units that may be classified into a plurality of control-plane and data-plane functional entities. An access and mobility management function (Access and Mobility Management Function, AMF) unit 139 is responsible for user access management, security authentication, and mobility management. A user plane function (User Plane Function, UPF) 139 is responsible for managing functions such as user plane data transmission and traffic statistics. A session management function (Session Management Function, SMF) 141 is responsible for functions such as session management, IP address allocation for the terminal devices, and traffic control of the UPF.

The terrestrial station 131 is responsible for forwarding signaling and service data between the satellite-based 5G base station 101 and the 5G core network.

The 5G new radio 145 or 147 is a radio link between the terminal device and the base station.

The Xn interface 149 is an interface between the 5G base station 101 and the 5G base station 102, and may be used for handover and other signaling exchange.

The NG interface 151 is an interface between the 5G base station 101 and the 5G core network, and is used for exchange of NAS signaling or the like of the core network and user service data.

A data network 135 provides data services.

It should be understood that, in addition to the foregoing satellite communication network, embodiments of this disclosure are also applicable to an aeronautical communication network for civil aviation, unmanned aerial vehicles, or the like, or are also applicable to, for example, a terrestrial communication network with a strong radio channel main path. This is not limited in this disclosure.

It should be understood that the foregoing wireless communication system is applicable to a high-frequency scenario (above 6G) such as a millimeter wave, and is also applicable to a low-frequency scenario (sub 6G). An application scenario of the wireless communication system includes but is not limited to an existing communication system like a 5th generation (5G) system or a new radio (new radio, NR) communication system, a future evolved public land mobile network (public land mobile network, PLMN) system, or the like.

The terminal device 103 shown above may be user equipment (user equipment, UE), a terminal (terminal), an access terminal, a terminal unit, a terminal station, a mobile station (mobile station, MS), a remote station, a remote terminal, a mobile terminal (mobile terminal), a wireless communication device, a terminal agent, a terminal device, or the like. The terminal device 103 may alternatively be a communication chip having a communication module, or may be a vehicle having a communication function, or a vehicle-mounted device (for example, a vehicle-mounted communication apparatus or a vehicle-mounted communication chip), or the like. The terminal device 103 may have a wireless transceiver function. The terminal device can perform communication (for example, wireless communication) with one or more network devices in one or more communication systems, and accepts network services provided by the network devices. The network devices herein include but are not limited to the network device (101) shown in the figure.

The terminal device 103 may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, or another processing device connected to a wireless modem, a vehicle-mounted device, a wearable device, a terminal apparatus in a 5G network, a terminal apparatus in a further evolved PLMN, or the like.

The terminal device 103 may be specifically a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal device 103 may be deployed on land, including an indoor or outdoor terminal device, or a handheld or vehicle-mounted terminal device; the terminal device 110 may be deployed on water (for example, on a ship); or the terminal device 103 may be deployed in air (for example, on an aircraft, a balloon, or a satellite). The network device (101) may be an access network device (or referred to as an access network site). The access network device is a device that provides a network access function, for example, a radio access network (radio access network, RAN) base station. The network device (101) may specifically include a base station (base station, BS), or include a base station, a radio resource management device configured to control the base station, and the like. The network device (101) may alternatively include a relay station (relay device), an access point, a base station or an NR base station in a 5G network, a base station in a future evolved PLMN, or the like. The network device (101) may be a wearable device or a vehicle-mounted device. Alternatively, the network device (101) may be a communication chip having a communication module.

For example, the network device (101) includes but is not limited to a base station (gNodeB, gNB) in 5G, an evolved NodeB (evolved NodeB, eNB) in a long term evolution (long term evolution, LTE) system, a radio network controller (radio network controller, RNC), a radio controller in a cloud radio access network (cloud radio access network, CRAN) system, a base station controller (base station controller, BSC), a home base station (for example, a home evolved NodeB, or a home NodeB, HNB), a baseband unit (baseBand unit, BBU), a transmitting and receiving point (transmitting and receiving point, TRP), a transmitting point (transmitting point, TP), and a mobile switching center, or may be an evolved (evolutional) NB (eNB or eNodeB) in LTE, or may be a base station device in a 5G network or an access network device in a future evolved PLMN, or may be a wearable device or a vehicle-mounted device.

In some deployments, the network device may include a central unit (centralized unit, CU) and a distributed unit (distributed unit, DU). The network device may further include an active antenna unit (active antenna unit, AAU). The CU implements some functions of the network device, and the DU implements some other functions of the network device. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. Network device examples include but are not limited to a NodeB (NodeB or NB), an evolved NodeB (eNodeB or eNB), a next-generation NodeB (gNB), a transmitting and receiving point (TRP), a remote radio unit (RRU), a radio head (RH), a remote radio head (RRH), an IAB node, and a low power node, for example, a femto node, a pico node, a reconfigurable intelligent surface (RIS), and a network-controlled repeater.

In addition, the network device (101) may be connected to a core network (core network, CN) device. The core network device may be configured to provide a core network service for the access network device (101) and the terminal device (103). The core network device may correspond to different devices in different systems. For example, in 3G, the core network device may correspond to a serving general packet radio service (general packet radio service, GPRS) support node (serving GPRS support node, SGSN) and/or a gateway GPRS support node (gateway GPRS Support Node, GGSN). In 4G, the core network device may correspond to a mobility management entity (mobility management entity, MME) and/or a serving gateway (serving gateway, S-GW). In 5G, the core network device may correspond to an access and mobility management function (access and mobility management function, AMF), a session management function (session management function, SMF), or a user plane function (user plane function, UPF).

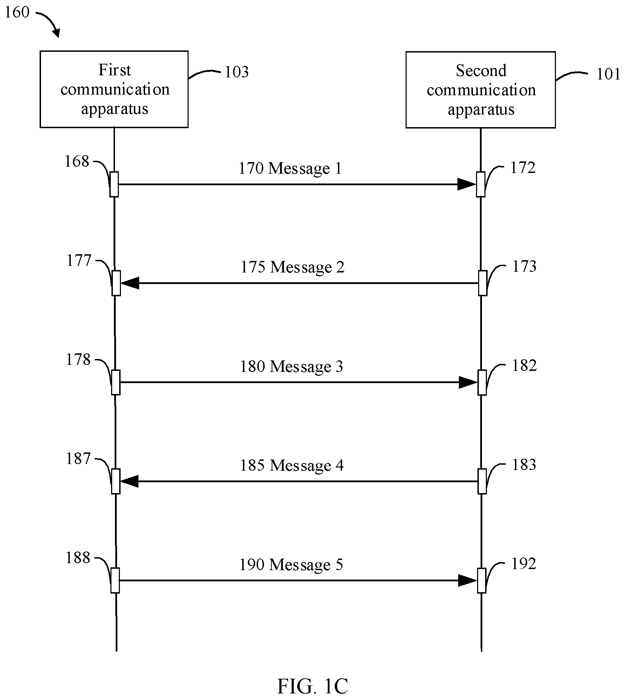

FIG. 1C is a diagram of a random access procedure according to an embodiment of this application. For a random access procedure 160, after receiving a broadcast message, a first communication apparatus 103, for example, a terminal device, obtains a configuration of a physical random access channel (Physical Random Access Channel, PRACH) from a system information block 1 (System Information Block 1, SIB1) message, randomly selects a preamble sequence at an equal probability, and initiates random access on a random access occasion (Random access Occasion, RO) corresponding to a received synchronization signal and broadcast channel block (Synchronization Signal and PBCH block, SSB), that is, sends (168) a message 1 (Msg1) 170 or a preamble sequence to a second communication apparatus 101, for example, a network device. After receiving (172) the message 1 170 of the first communication apparatus 103, the second communication apparatus 101 obtains an uplink timing advance (Timing advance, TA) of the first communication apparatus 103, and sends (173) a message 2 (Msg2) 175 on a PDSCH channel as an RA response. After sending the message 1 170, the first communication apparatus 103 starts a corresponding random access response window (RA-Response window, RAR Window). In this window, the first communication apparatus 103 continuously monitors a PDCCH channel, and the PDCCH channel is used to schedule the message 2 175. If the RA response includes an identifier that is the same as an identifier of the preamble sequence sent by the first communication apparatus, the first communication apparatus 103 considers that the RA response is successfully received (177). In the RAR, the network device further transmits uplink scheduling information (Uplink grant, UL grant) related to a message 3. To be specific, after receiving the RAR, the first communication apparatus 103 obtains a resource position at which the first communication apparatus 103 sends the message 3. The first communication apparatus 103 sends (178) a message 3 180 at the resource position allocated by the second communication apparatus, where the message 3 180 carries an identity (Identity, ID) of the first communication apparatus 103. After sending the message 3, the first communication apparatus 103 starts a contention resolution timer (duration of the contention resolution timer is, for example, 64 ms), and then monitors the PDCCH in a time window of the timer. The second communication apparatus 101 may assist the first communication apparatus 103 in performing contention resolution by using a cell-radio network temporary identifier (Cell-Radio Network Temporary Identifier, C-RNTI) on the PDCCH or using a user equipment contention resolution identity (UE Contention Resolution Identity) on the PDSCH, and send (183) a message 4 185. Before the contention resolution timer expires, the first communication apparatus 103 keeps monitoring the PDCCH channel. If the PDCCH scrambled by using the C-RNTI of the first communication apparatus 103 and the message 4 185 are monitored (187), it is considered that the contention is resolved, the data PDSCH scheduled by the PDCCH is decoded, and hybrid automatic repeat request (Hybrid Automatic Repeat reQuest, HARQ) feedback, referred to as a message 5 (Msg5) 190, is sent (188) for a decoding result. The feedback may be carried by using a format of physical uplink control channel (Physical Uplink Control Channel, PUCCH) format-1, and is 1 bit to 2 bits.

In the random access procedure 160, a failure of any one of the foregoing steps may cause a failure of random access. Therefore, to support direct connection of a handheld terminal to a satellite, in 3GPP R18, researches on uplink coverage enhancement are provided, to ensure success of random access to each Msg. Table 1 and Table 2 show a gap between a decoding threshold of each of a Msg3 and a PUCCH for Msg4 HARQ-ACK and a link budget. A negative value indicates that the link budget can meet a decoding requirement, and a positive value indicates that the link budget cannot meet the decoding requirement and needs to be enhanced. It can be learned from a comparison between Table 1 and Table 2 that, for example, in a Rural NTN-TDL-C channel, in several satellite orbit environments, a positive-value Coverage Gap of the PUCCH is smaller than a positive-value Coverage Gap of the Msg3. In other words, less enhancement is required.

**Table 1 Msg3 link budget comparison**

| PUSCH Msg3 | | | | Rural NTN-TDL-A channel | | Rural NTN-TDL-C channel | |
|---|---|---|---|---|---|---|---|
| Satellite orbit | Satellite parameter set | Elevation angle (degree) | Carrier-to-noise ratio (dB) | Required SNR@iBLER 10% (dB) | Coverage Gap (dB) | Required SNR@iBLER 10% (dB) | Coverage Gap (dB) |
| GEO | 1 | 12.5 | -18.7 | -10.0 | 8.7 | -12.1 | 6.6 |
| | 2 | 20 | -23.6 | -10.0 | 13.6 | -12.1 | 11.5 |
| LEO-1200 | 1 | 30 | -10.5 | -10.0 | 0.5 | -12.1 | -1.6 |
| | 2 | 30 | -16.5 | -10.0 | 6.5 | -12.1 | 4.4 |
| LEO-600 | 1 | 30 | -5.2 | -10.0 | -4.8 | -12.1 | -6.9 |
| | 2 | 30 | -11.2 | -10.0 | 1.2 | -12.1 | -0.9 |

**Table 2 PUCCH for Msg4 HARQ-ACK link budget comparison**

| PUCCH format-1 with 2 bits UCI | | | | Rural NTN-TDL-A channel | | Rural NTN-TDL-C channel | |
|---|---|---|---|---|---|---|---|
| Satellite orbit | Satellite parameter set | Elevation angle (degree) | Carrier-to-noise ratio (dB) | Required SNR (dB) | Coverage Gap (dB) | Required SNR (dB) | Coverage Gap (dB) |
| GEO | 1 | 12.5 | -15.73 | -6.93 | 8.8 | -11.55 | 4.18 |
| | 2 | 20 | -20.57 | -6.53 | 14.04 | -11.47 | 9.1 |
| LEO-1200 | 1 | 30 | -7.54 | -6.88 | 0.66 | -11.66 | -4.12 |
| | 2 | 30 | -13.54 | -6.88 | 6.66 | -11.66 | 1.88 |
| LEO-600 | 1 | 30 | -2.15 | -6.88 | -4.73 | -11.66 | -9.51 |
| | 2 | 30 | -8.15 | -6.88 | 1.27 | -11.66 | -3.51 |

In embodiments of this disclosure, the first communication apparatus 103, for example, the terminal device, may measure a reference signal received power (Reference Signal Received Power, RSRP) of a downlink broadcast signal, and compare the reference signal received power with a specified threshold. If the RSRP measured by the terminal device is less than the threshold, it indicates that a downlink budget may not reach a decoding threshold, and enhancement needs to be performed through repeat transmission. In this case, the terminal may initiate random access by using a specific preamble sequence, to implicitly request, from the network device, a repeated resource for subsequently configuring the Msg3.

After receiving the specific preamble sequence, the network device transmits, via the RAR, a UL grant for scheduling the Msg3. A modulation and coding scheme (Modulation and Coding Scheme, MCS) field in the UL grant is originally 4 bits. In this embodiment of this disclosure, two most significant bits of the MCS may be re-interpreted as a repetition quantity of the Msg3, and two least significant bits are still interpreted as an index of an MCS resource.

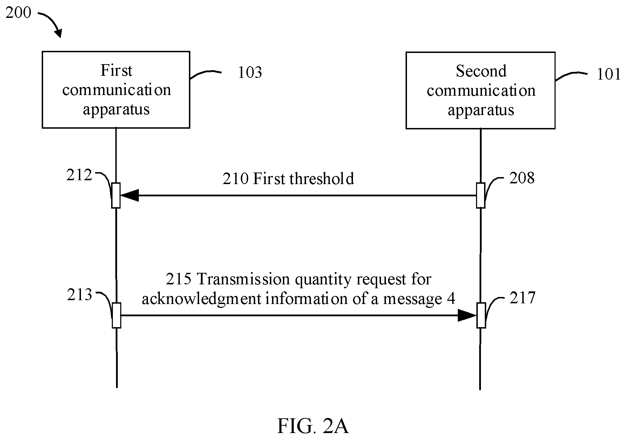

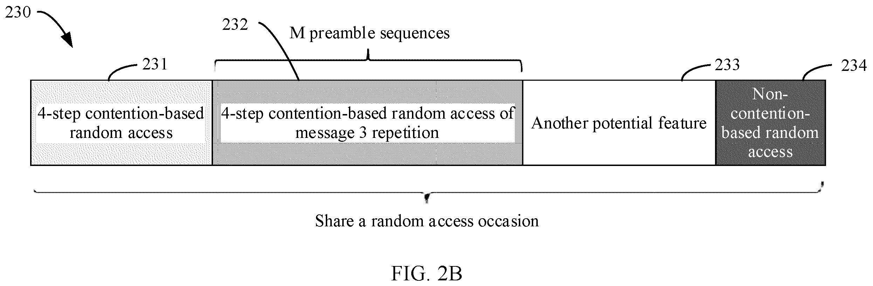

A specific preamble requesting Msg3 repetition and a preamble not requesting repetition may be different sequence indexes on a same RO. As shown in FIG. 2B, a preamble set 230 shares a random access occasion. A preamble set for 4-step contention-based random access is 231, and a preamble set for 4-step contention-based random access of message 3 repetition is 232 and includes M preamble sequences. A reserved preamble set for another potential feature is 233, and a preamble set for non-contention-based random access is 234.

For the preamble set division manner in FIG. 2B, the following policies may be used: (1) The network device 101 does not distinguish real link quality of UE, and configures a same repetition quantity for terminal devices in a same cell or beam. (2) The terminal device 103 requests the network device 101 to perform PUCCH repetition, and then the network device 101 dynamically configures a specific repetition quantity. The PUCCH repetition may completely reuse the Msg3 repetition. In other words, provided that the terminal device 103 initiates random access by using the preamble requesting the Msg3 repetition, the network device 101 configures, for the terminal device 103, a repetition quantity of the PUCCH that is the same as a repetition quantity of the Msg3. (3) The terminal device 103 reports a capability of the terminal device 103, and then the network device 101 dynamically configures a repetition quantity for the terminal device 103.

The preceding policies may have some drawbacks. For the policy (1), the network device 101 configures a same repetition quantity for all terminal devices 103 in a same cell or beam. However, to ensure link transmission, a repetition quantity as large as possible may be configured, that is, a large quantity of repetition resources are configured for Msg5s of all the terminal devices 103. As a result, a large quantity of resources are wasted, and an access capacity is affected. For the policy (2), it can be learned from Table 1 and Table 2 that, because the PUCCH and the Msg3 occupy different frequency domain resources, although both are uplink channels, link budgets of the PUCCH and the Msg3 are different. For example, the link budget of the PUCCH is better. If a same repetition quantity is used for the two, a waste of resources is caused. For the policy (3), whether the terminal device 103 supports repetition is not equal to whether the terminal needs to perform repetition. It is still possible that the network device 101 configures inappropriate PUCCH repetition for the terminal device 103.

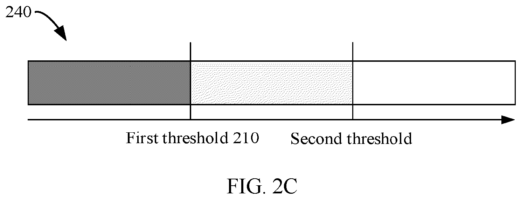

In embodiments of this disclosure, the second communication apparatus 101, for example, the network device, configures two thresholds for the first communication apparatus 101, for example, the terminal device, as shown in FIG. 2C. A first threshold 210 is less than a second threshold, the first threshold is used to determine whether the PUCCH needs to be repeated, and the second threshold is used to determine whether the Msg3 needs to be repeated. It can be learned from the foregoing link budgets that, because the PUCCH may occupy one resource block (Resource Block, RB) in frequency domain, the link budget of the PUCCH is better than that of the Msg3. In other words, when the repetition quantity needs to be configured for the Msg3, the PUCCH may meet the decoding threshold without repetition. On the contrary, when the repetition quantity needs to be configured for the PUCCH, the repetition quantity needs be configured for the Msg3. Therefore, a PUCCH decision threshold is less than a Msg3 decision threshold. As shown in FIG. 2A, the second communication apparatus 101 may send (208) the first threshold 210 to the first communication apparatus 103. In this way, a transmission quantity of a Msg5 is controlled based on the first threshold, to save transmission resources and provide high flexibility for transmission of the Msg5. The second communication apparatus 101 may also send the second threshold to the first communication apparatus 103. In this way, a transmission quantity request for the Msg3 and a transmission quantity request for the Msg5 are separated, to adapt to a feature that the Msg3 and the Msg5 have different thresholds, save transmission resources, and provide high flexibility for transmission of the Msg3 and the Msg5. In this embodiment of this disclosure, the first threshold 210 may be a single threshold, or may be a plurality of different thresholds, to determine a plurality of different quantities of retransmissions. This is not limited in this disclosure.

In embodiments of this disclosure, the first communication apparatus 103 may receive, from the second communication apparatus 101, a transmission quantity request mode used for the acknowledgment information of the message 4. Further, the first communication apparatus 103 may send, based on the first threshold and the transmission quantity request mode, a transmission quantity request for the acknowledgment information of the message 4. In this way, the transmission quantity request for the acknowledgment information of the message 4 may be sent in the plurality of different modes, to improve the system flexibility. In some implementations, the transmission quantity request mode includes at least one of the following: sending a preconfigured preamble sequence; scrambling the message 3 by using a preconfigured scrambling code; or performing indication in the message 3. In this way, the transmission quantity request for the acknowledgment information of the message 4 may be sent in the plurality of different modes, to improve the system flexibility. In the following embodiments, different transmission quantity request modes are separately described in detail.

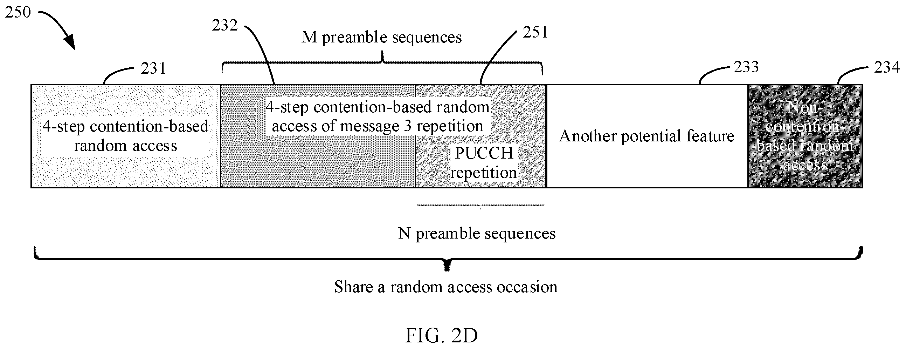

In embodiments of this disclosure, the transmission quantity request mode may be sending a preconfigured preamble sequence. The first communication apparatus 103 may send the preconfigured preamble sequence based on the first threshold 210, to request a PUCCH, that is, repeat transmission of the acknowledgment information of the message 4. FIG. 2D is a diagram of a preamble sequence of PUCCH repetition according to an embodiment of this application. As shown in FIG. 2B, N preamble resources 251 may be selected from M preamble resources 232 configured for requesting Msg3 repetition, and are used by the first communication apparatus 103 to request to repeatedly transmit the Msg3 and the PUCCH simultaneously.

In embodiments of this disclosure, if an RSRP obtained by the first communication apparatus 103, for example, the terminal device, by measuring a reference downlink reference signal is less than the first threshold 210, one preamble is selected from the configured N preambles to perform random access on a corresponding RO, and it indicates that repeated configuration is requested for both the Msg3 and the PUCCH. If the RSRP obtained by the first communication apparatus 103 by measuring the reference downlink reference signal is greater than the first threshold 210 but less than the second threshold, it indicates that the Msg3 needs to request repetition, but the PUCCH does not request repetition. In this case, one preamble is randomly selected from M-N preambles other than the N preambles in the M preambles to initiate random access. If the RSRP obtained by the first communication apparatus 103 by measuring the reference downlink reference signal is greater than the second threshold, it indicates that neither the Msg3 nor the PUCCH needs to be repeated, that is, the terminal uses a non-enhanced preamble, that is, a preamble is selected from the preamble set 231 of the 4-step contention-based random access, to initiate random access.

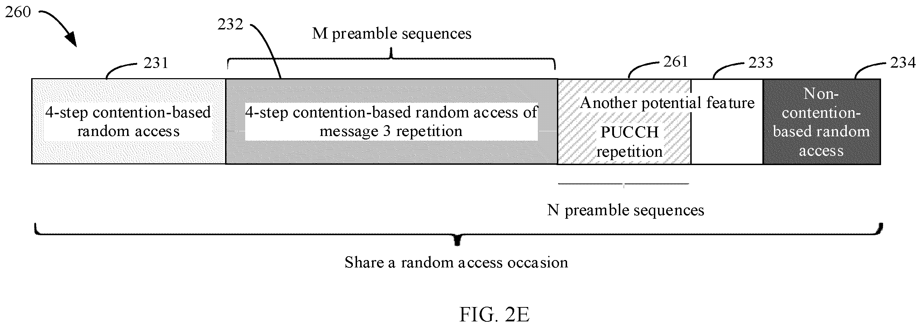

In embodiments of this disclosure, the preamble set in which both the Msg3 and the PUCCH are repeated may be selected in another manner. FIG. 2E is a diagram of a preamble sequence of PUCCH repetition according to another embodiment of this application. As shown in FIG. 2B, N preamble resources 261 are selected from the preamble set 233 for another potential feature, and are used by the first communication apparatus 103 to request simultaneous repeat transmission of the Msg3 and the PUCCH. In this way, the preamble sequence set indicating repetition of both the message 3 and the acknowledgment information of the message 4 may be determined in a more flexible manner, to reserve a plurality of selection spaces for different use scenarios. It may be understood that different preambles may be used to correspond to different transmission quantities of the PUCCH, and are determined by different first thresholds 210. This is not limited in this disclosure.

In embodiments of this disclosure, for example, after the second communication apparatus 101, for example, the network device, receives the preamble sent by the first communication apparatus 103, if the second communication apparatus 101 determines that a repeat transmission resource needs to be configured for the PUCCH, a transmission quantity indication of the PUCCH may be carried in downlink control information (Downlink Control Information, DCI) for scheduling the Msg4. Several fields in the DCI for scheduling the Msg4 are 2 to 3 bits. To indicate the maximum repeat transmission quantity 8, 3 bits are required. For example, the MCS field may be used for re-interpretation. Therefore, a group of transmission quantities may also be configured via radio resource control (Radio Resource Control, RRC), and the DCI indicates an index of the group of transmission quantities. An indication of the index of the transmission quantities needs only 2 bits, and a manner of reusing an existing field may be used, as shown in a field listed in the following table. In this way, an existing signaling resource in the DCI for scheduling the Msg4 is used to reduce additional signaling overheads, and better compatibility with an existing system is maintained. In addition, the network device may indicate a transmission quantity of the acknowledgment information of the message 4 that is actually executed by the terminal device, to prevent a conflict with another communication apparatus and improve communication reliability. It may be understood that the indicated transmission quantity may be a plurality of times, or may be one time. This is not limited in this disclosure.

**Table 3 Transmission quantity indication of a PUCCH carried in DCI for scheduling a Msg4**

| Field | Quantity of bits | Remarks |
|---|---|---|
| Modulation and coding scheme MCS | 5 bits | High-order MCS modulation is not applicable to coverage enhancement scenarios. The two most significant bits or the two least significant bits may indicate a transmission quantity. |
| HARQ process number | 4 bits | Msg4 scheduling does not need to occupy too many process numbers. The two most significant bits or the two least significant bits may indicate a transmission quantity. |
| Downlink allocation index | 2 bits | For a PDCCH scrambled by using a TC-RNTI, this field is a reserved bit, has no meaning, and may indicate a transmission quantity. |

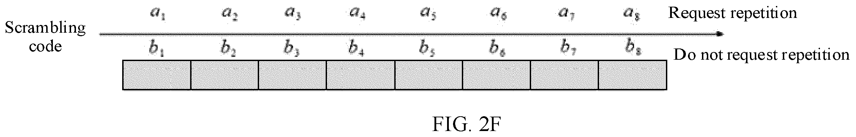

In embodiments of this disclosure, the transmission quantity request mode may be scrambling the message 3 by using a preconfigured scrambling code. That the first communication apparatus 103 sends a transmission quantity request for the acknowledgment information of the message 4 includes: The first communication apparatus selects, based on the first threshold 210, one of a plurality of scrambling codes to scramble the message 3. FIG. 2F is a diagram of a scrambling code of a message 3 according to an embodiment of this application.

For example, for whether a PUCCH and a Msg3 need to be repeated, the second communication apparatus 101, for example, the network device, may configure, for the first communication apparatus 103, for example, the terminal device, a first threshold 210 and a second threshold for measurement of a downlink reference signal. The network device may configure two orthogonal scrambling codes to scramble the Msg3, and a scrambling code length may be related to a repetition quantity of the Msg3. For example, the repetition quantity of the Msg3 configured by the network device 101 is 8, and the two scrambling codes are configured as follows: CC1=[a1, a2, ..., a8]=[1, -1, 1, -1, 1, -1, 1, -1] and CC2=[b1, b2, ..., b8]=[1, 1, 1, 1, 1, 1, 1, 1]. If the terminal device 103 requests repetition of the PUCCH, the Msg3 is scrambled by using the CC1. In this case, data during eight repetitions that is received by the network device 101 is [TB, TB, TB, -TB, TB, -TB, TB, -TB]. The network device 101 calculates power by performing a correlation operation on each received TB and the local CC1, and then can determine that the terminal requests repetition of the PUCCH. In addition, the network device 101 demodulates and then combines data in all slots, to obtain the Msg3 through decoding, and transmission of the Msg3 is not affected. On the contrary, if the terminal device 103 does not request repetition of the PUCCH, the Msg3 is scrambled by using the CC2. In this case, it is clear that power obtained after eight pieces of data received by the network device 101 are combined is higher. In addition to the CC1 and the CC2, another scrambling code that is orthogonal to the CC1 and the CC2 may be used to distinguish requests for different quantities of retransmissions of the PUCCH. The scrambling code may use another sequence manner, for example, a Walsh sequence or a Hadamard sequence that is orthogonal to each other, or a quasi-orthogonal Zadoff-Chu sequence, or an m sequence. Alternatively, the scrambling code length may be less than the repetition quantity of the Msg3, and scrambling is performed on the repeated Msg3 for a plurality of times. This is not limited in this disclosure.

If the RSRP obtained by the terminal device 103 by measuring the reference downlink reference signal is less than the first threshold 210, for repeat transmission of the Msg3, the CC1 is used for scrambling, to request repeat transmission of the PUCCH. The request for repeat transmission of the Msg3 may be performed in a manner shown in FIG. 2B, and selecting a specific preamble does not need to be changed. If the RSRP obtained by the terminal device 103 by measuring the reference downlink reference signal is greater than the first threshold 210, for repeat transmission of the Msg3 the CC2 is used for scrambling. In this way, the transmission quantity request for the acknowledgment information of the message 4 may be sent without directly consuming a signaling resource of the Msg3, to improve transmission efficiency.

For the transmission quantity request for the PUCCH by the terminal device 103, a transmission quantity indication of the PUCCH by the network device 101 may be carried in DCI for scheduling the Msg4, and a value directly indicating the repetition quantity of the PUCCH may also indicate an offset of the transmission quantity of the PUCCH relative to the transmission quantity of the Msg3. For example, when the transmission quantity of the Msg3 is 8, if the offset indicated in the DCI for scheduling the Msg4 is 4, it indicates that the transmission quantity of the PUCCH is 4. In embodiments of this disclosure, field interpretation in Table 3 may be reused. In this way, flexibility of indicating the transmission quantity of the PUCCH can be improved, and signaling resources can be saved.

In embodiments of this disclosure, the transmission quantity request mode may be indicated in the message 3. If the RSRP obtained by the terminal device 103 by measuring the reference downlink reference signal is less than the first threshold 210, the terminal device 103 adds, to the message 3, the transmission quantity of the PUCCH requested by the terminal device 103. In this case, the terminal device 103 has obtained the repetition quantity of the Msg3 of the network device 101, and the terminal device 103 may determine the expected transmission quantity of the PUCCH based on differences between a downlink reference signal measurement value and the two thresholds. For example, if the downlink reference signal measurement value obtained by the terminal device 103 through measurement is closer to the first threshold 210, and the repetition quantity of the Msg3 configured by the network device 101 is 2, the transmission quantity of the PUCCH that is requested by the terminal device 103 and that may be directly transmitted by the terminal device 103 in the Msg3 is 2. If the downlink reference signal measurement value obtained by the terminal device 103 through measurement is closer to the second threshold, the transmission quantity of the PUCCH that is requested by the terminal device 103 and that may be transmitted by the terminal device 103 in the Msg3 is 1. In other words, the PUCCH does not need to be repeated.

After receiving the Msg3 sent by the terminal device 103, if determining that a repeated resource needs to be configured for the PUCCH, the network device 101 transmits the repetition quantity indication of the PUCCH in the DCI for scheduling the Msg4. In this case, the network device 101 may indicate the transmission quantity of the PUCCH in the foregoing manner of directly indicating a value or an offset, or may indicate a scaling factor of the transmission quantity of the PUCCH relative to the transmission quantity of the Msg3. Because link budgets of the Msg3 and the PUCCH are similar, the transmission quantity of the PUCCH may be equal to the transmission quantity of the Msg3, or be halved compared with the transmission quantity of the Msg3. Therefore, if the scaling factor is indicated, only one bit is required. That is, when the bit is 0, it indicates that the transmission quantity of the PUCCH indicated by the network device 101 is the same as that of the Msg3; and when the bit is 1, it indicates that the transmission quantity of the PUCCH indicated by the network device is one level lower than that of the Msg3. Because only one bit is required, in addition to the fields in Table 3, more fields in the DCI for scheduling the Msg4 may indicate the scaling factor, which is specifically shown in Table 4. In this way, flexibility of indicating the transmission quantity of the PUCCH can be improved, and signaling resources can be further saved.

**Table 4 Scaling factor of a transmission quantity of a PUCCH relative to a transmission quantity of a Msg3 carried in DCI for scheduling a Msg4**

| Field | Quantity of bits | Remarks |
|---|---|---|
| Redundancy version | 2 bits | Only two redundancy versions may be used for transmission, and one bit is saved to indicate a scaling factor. |
| PUCCH resource indication | 3 bits | The scaling factor may be indicated by the one most significant bit or the one least significant bit. |
| PDSCH-to-HARQ feedback timing indication | 3 bits | A timing relationship of HARQ feedback of the Msg4 may use the one most significant bit or the one least significant bit to indicate the scaling factor. |
| Time domain resource allocation | 4 bits. | Index of the time domain resource allocation |

In embodiments of this disclosure, the terminal device 103 may request, in the Msg3, the scaling factor of the transmission quantity of the PUCCH relative to the transmission quantity of the Msg3. If the RSRP obtained by the terminal device 103 by measuring the reference downlink reference signal is less than the first threshold 210, the terminal device 103 adds, to the Msg3 message, the scaling factor that is of the transmission quantity of the PUCCH relative to the transmission quantity of the Msg3 and that is requested by the terminal device 103. In this case, the terminal device 103 has obtained the transmission quantity of the Msg3 of the network device 101, and the terminal device 103 may determine the expected transmission quantity of the PUCCH based on differences between a downlink reference signal measurement value and the two thresholds. For example, if the downlink reference signal measurement value obtained by the terminal device 103 through measurement is closer to the first threshold 210, and the transmission quantity of the Msg3 configured by the network device 101 is 4, the scaling factor that is of the transmission quantity of the PUCCH requested by the terminal device 103 and that is transmitted by the terminal device 103 in the Msg3 is 1, indicating that the transmission quantity of the PUCCH requested by the terminal device 103 is 4; and the scaling factor that is of the transmission quantity of the PUCCH requested by the terminal device 103 and that is transmitted by the terminal device 103 in the Msg3 is 2, indicating that the transmission quantity of the PUCCH requested by the terminal device 103 is 2. If the downlink reference signal measurement value obtained by the terminal device 103 through measurement is closer to the second threshold, the scaling factor that is of the transmission quantity of the PUCCH requested by the terminal device 103 and that is transmitted by the terminal device 103 in the Msg3 is 0. In other words, the PUCCH does not need to be repeatedly transmitted, and is transmitted only once. In this way, signaling overheads for requesting the transmission quantity of the PUCCH in the Msg3 can be reduced, and resources can be saved.

In embodiments of this disclosure, when the network device 101 indicates the transmission quantity of the PUCCH, a table, for example, Table 5 may also be configured, and there is a specific offset for each transmission quantity. A value or an index of the offset is indicated in the DCI for scheduling the Msg4, so that a transmission quantity of the PUCCH is accurately indicated when a transmission quantity of the Msg3 has been scheduled. This can reduce signaling overheads, and improve flexibility.

**Table 5 Index table of a transmission quantity of a PUCCH and a transmission quantity of a Msg3**

| Transmission quantity of the Msg3 | Transmission quantity of the PUCCH | Index |
|---|---|---|
| 2 | 1, 2 | 1, 2 |
| 3 | 1, 2, 4 | 1, 2, 3 |
| 4 | 1, 2, 4 | 1, 2, 3 |
| 7 | 1, 2, 4, 8 | 1, 2, 3, 4 |
| 8 | 1, 2, 4, 8 | 1, 2, 3, 4 |
| 12 | 1, 2, 4, 8 | 1, 2, 3, 4 |
| 16 | 1, 2, 4, 8 | 1, 2, 3, 4 |

In embodiments of this disclosure, the terminal device 103 may request a transmission quantity of a PUCCH in a two-level manner. For the network device 101, the network device 101 configures two thresholds: a first threshold 210 and a second threshold. The network device 101 selects the first N or last N preambles from M preambles configured for repeat transmission of a Msg3 to indicate that both the Msg3 and the PUCCH are requested to be repeatedly transmitted, or may select N preambles from a candidate resource to indicate that both the Msg3 and the PUCCH are requested to be repeatedly transmitted. The network device 101 may configure two orthogonal scrambling codes to scramble the Msg3. The configuration may be at a cell level or a UE level, and a scrambling code length is related to a repetition quantity of the Msg3. The network device 101 sends the two thresholds to the terminal device.

The terminal device 103 compares an RSRP obtained by measuring a downlink reference signal with the second threshold 210, and sends a preamble request if determining to request repetition of both the PUCCH and the Msg3. If the repetition quantity of the Msg3 that is configured by the network device and that is received by the terminal device 103 is conservative, or the terminal device 103 obtains, through calculation based on the ephemeris and a geographical location of the terminal device 103, that an elevation angle becomes smaller, that is, the terminal device 103 predicts that the terminal device 103 is about to enter a worse channel environment, the terminal device 103 selects, for example, a scrambling code CC1 during transmission of the Msg3 to send a request again, to increase transmission quantity requests of the PUCCH.

The terminal device 103 compares an RSRP obtained by measuring a downlink reference signal with the second threshold 210, and sends a preamble request if determining to request repetition of both the PUCCH and the Msg3. If the repetition quantity of the Msg3 that is configured by the network device 101 and that is received by the terminal device 103 is large, or the terminal device 103 obtains, through calculation based on the ephemeris and a geographical location of the terminal device 103, that an elevation angle becomes larger, that is, the terminal device 103 considers that the terminal device 103 is about to enter a better channel environment, the terminal device 103 selects, for example, a scrambling code CC2 during transmission of the Msg3 to roll back a request for repetition of the PUCCH, to reduce transmission quantity requests of the PUCCH.

The network device determines, with reference to the received preamble and the Msg3, whether the terminal initiates a request, and determines whether to configure a repeated resource for the PUCCH. The indication may be performed in the DCI of the Msg4 according to the foregoing embodiment, or may be performed in the DCI for scheduling the Msg3. In this way, the transmission quantity indication of the acknowledgment information of the message 4 may be received in a plurality of manners, to improve communication flexibility and adaptability to different radio channel environments. It may be understood that the foregoing method is not only applicable to a satellite communication system that uses the ephemeris and the elevation angle, but also applicable to an aeronautical communication system, a ground communication system with a strong main path, and the like. This is not limited in this disclosure.

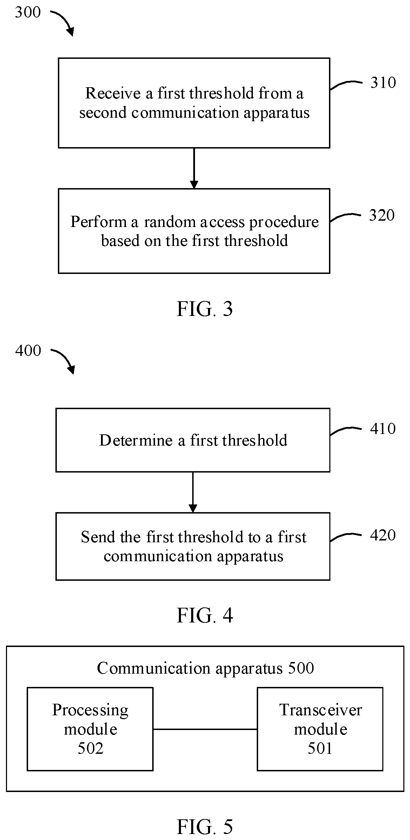

FIG. 3 is a flowchart 300 of a communication method implemented by a first communication apparatus 103 according to an embodiment of this disclosure. In a possible implementation, the method 300 may be implemented by the first communication apparatus 103, for example, a terminal device in an example environment 100. In another possible implementation, the method 300 may alternatively be implemented by another electronic apparatus independent of the example environment 100. For example, the following describes the method 300 by using an example in which the first communication apparatus 103, for example, the terminal device in the example environment 100, implements the method 300.

310: The first communication apparatus 103 receives a first threshold, where the first threshold is used to determine whether acknowledgment information of a message 4 (Msg4) in a random access procedure between the first communication apparatus 103 and a second communication apparatus 101 is repeatedly transmitted.

320: The first communication apparatus 103 performs the random access procedure based on the first threshold.

In some embodiments, the first threshold is less than a second threshold, and the second threshold is used to determine whether a message 3 (Msg3) in the random access procedure is repeatedly transmitted.

In some embodiments, that the first communication apparatus 103 performs the random access procedure includes: The first communication apparatus 103 receives, from the second communication apparatus 101, a transmission quantity request mode used for the acknowledgment information of the message 4. Further, based on the first threshold and the transmission quantity request mode, the first communication apparatus 103 sends a transmission quantity request for the acknowledgment information of the message 4.

In some embodiments, the transmission quantity request mode includes at least one of the following: sending a preconfigured preamble sequence; scrambling the message 3 by using a preconfigured scrambling code; or performing indication in the message 3.

In some embodiments, the transmission quantity request mode is the sending the preconfigured preamble sequence, and that the first communication apparatus 103 sends a transmission quantity request for the acknowledgment information of the message 4 includes: The first communication apparatus 103 selects, based on the first threshold, a preamble sequence from a preamble sequence set indicating repetition of both the message 3 and the acknowledgment information of the message 4; and the first communication apparatus 103 sends the selected preamble sequence.

In some embodiments, the preamble sequence set indicating repetition of both the message 3 and the acknowledgment information of the message 4 is any one of the following: a part of a preamble sequence set for repetition of the message 3; and a part of a reserved preamble sequence resource that does not overlap the preamble sequence set indicating repetition of the message 3.

In some embodiments, the transmission quantity request mode is the scrambling the message 3 by using the preconfigured scrambling code, and that the first communication apparatus 103 sends a transmission quantity request for the acknowledgment information of the message 4 includes: The first communication apparatus 103 selects, based on the first threshold, one of a plurality of scrambling codes to scramble the message 3; and the first communication apparatus 103 sends a scrambled message 3.

In some embodiments, the transmission quantity request mode is the performing indication in the message 3, and that the first communication apparatus 103 sends a transmission quantity request for the acknowledgment information of the message 4 includes: The first communication apparatus 103 sends, in the message 3 based on the first threshold, the transmission quantity request for the acknowledgment information of the message 4.

In some embodiments, the transmission quantity request for the acknowledgment information of the message 4 includes at least one of the following: a repetition quantity of the acknowledgment information of the message 4; or a scaling factor of a repetition quantity of the acknowledgment information of the message 4 relative to a repetition quantity of the message 3.

In some embodiments, that the first communication apparatus 103 sends a transmission quantity request for the acknowledgment information of the message 4 further includes: The first communication apparatus 103 selects, based on the first threshold, a preamble sequence from a preamble sequence set indicating repetition of both the message 3 and the acknowledgment information of the message 4; the first communication apparatus 103 sends the selected preamble sequence; the first communication apparatus 103 selects the one of the plurality of scrambling codes to scramble the message 3; and the first communication apparatus 103 sends the scrambled message 3.

In some embodiments, that the first communication apparatus 103 performs the random access procedure further includes: The first communication apparatus 103 receives a transmission quantity indication of the acknowledgment information of the message 4 from the second communication apparatus 101.

In some embodiments, that the first communication apparatus 103 receives a transmission quantity indication of the acknowledgment information of the message 4 includes at least one of the following: The first communication apparatus 103 receives, from the message 4, the transmission quantity indication of the acknowledgment information of the message 4; the first communication apparatus 103 receives the transmission quantity indication of the acknowledgment information of the message 4 from downlink control information for scheduling the message 4; or the first communication apparatus 103 receives the transmission quantity indication of the acknowledgment information of the message 4 from downlink control information for scheduling the message 3.

In some embodiments, the transmission quantity indication of the acknowledgment information of the message 4 includes at least one of the following: the repetition quantity of the acknowledgment information of the message 4; an offset of the repetition quantity of the acknowledgment information of the message 4 relative to the repetition quantity of the message 3; the scaling factor of the repetition quantity of the acknowledgment information of the message 4 relative to the repetition quantity of the message 3; or a table index including the repetition quantity of the acknowledgment information of the message 4 and the repetition quantity of the message 3.

FIG. 4 is a flowchart of a communication method implemented by a second communication apparatus 101 according to an embodiment of this application. In a possible implementation, the method 400 may be implemented by the second communication apparatus 101, for example, a network device in the example environment 100. In another possible implementation, the method 400 may alternatively be implemented by another electronic apparatus independent of the example environment 100. For example, the following describes the method 400 by using an example in which the second communication apparatus 101 in the example environment 100 implements the method 400.

410: The second communication apparatus 101 determines a first threshold, where the first threshold is used to determine whether acknowledgment information of a message 4 (Msg4) in a random access procedure is repeatedly transmitted.

420: The second communication apparatus 101 sends the first threshold to a first communication apparatus 103.

In some embodiments, the first threshold is less than a second threshold, and the second threshold is used to determine whether a message 3 (Msg3) in the random access procedure is repeatedly transmitted.

In some embodiments, the second communication apparatus 101 further sends, to the first communication apparatus 103, a transmission quantity request mode used for the acknowledgment information of the message 4; and the second communication apparatus 101 receives, from the first communication apparatus 103 based on the transmission quantity request mode, a transmission quantity request for the acknowledgment information of the message 4.

In some embodiments, the transmission quantity request mode includes at least one of the following: sending a preconfigured preamble sequence; scrambling the message 3 by using a preconfigured scrambling code; or performing indication in the message 3.

In some embodiments, the transmission quantity request mode is the sending the preconfigured preamble sequence, and that the second communication apparatus 101 receives a transmission quantity request for the acknowledgment information of the message 4 includes: The second communication apparatus 101 receives, from the preamble sequence, the transmission quantity request for the acknowledgment information of the message 4.

In some embodiments, the transmission quantity request mode is the scrambling the message 3 by using the preconfigured scrambling code, and that the second communication apparatus 101 receives a transmission quantity request for the acknowledgment information of the message 4 includes: The second communication apparatus 101 descrambles a received message 3, to obtain the transmission quantity request for the acknowledgment information of the message 4.

In some embodiments, the transmission quantity request mode is the performing indication in the message 3, and that the second communication apparatus 101 receives a transmission quantity request for the acknowledgment information of the message 4 includes: The second communication apparatus 101 receives, from the message 3, the transmission quantity request for the acknowledgment information of the message 4.

In some embodiments, the transmission quantity request for the acknowledgment information of the message 4 includes at least one of the following: a repetition quantity of the acknowledgment information of the message 4; or a scaling factor of a repetition quantity of the acknowledgment information of the message 4 relative to a repetition quantity of the message 3.

In some embodiments, that the second communication apparatus 101 receives a transmission quantity request for the acknowledgment information of the message 4 further includes: The second communication apparatus 101 receives, from the preamble sequence, the transmission quantity request for the acknowledgment information of the message 4; and the second communication apparatus 101 descrambles the received message 3, to obtain the transmission quantity request for the acknowledgment information of the message 4 for correction.

In some embodiments, the second communication apparatus 101 further sends a transmission quantity indication of the acknowledgment information of the message 4 to the first communication apparatus 103 based on the transmission quantity request for the acknowledgment information of the message 4.

In some embodiments, that the second communication apparatus 101 sends a transmission quantity indication of the acknowledgment information of the message 4 includes at least one of the following: The second communication apparatus 101 sends, via the message 4, the transmission quantity indication of the acknowledgment information of the message 4; the second communication apparatus 101 sends the transmission quantity indication of the acknowledgment information of the message 4 via downlink control information for scheduling the message 4; or the second communication apparatus 101 sends the transmission quantity indication of the acknowledgment information of the message 4 via downlink control information for scheduling the message 3.

In some embodiments, the transmission quantity indication of the acknowledgment information of the message 4 includes at least one of the following: the repetition quantity of the acknowledgment information of the message 4; an offset of the repetition quantity of the acknowledgment information of the message 4 relative to the repetition quantity of the message 3; the scaling factor of the repetition quantity of the acknowledgment information of the message 4 relative to the repetition quantity of the message 3; or a table index including the repetition quantity of the acknowledgment information of the message 4 and the repetition quantity of the message 3.

In embodiments provided in this application, the methods provided in embodiments of this application are described from the perspective of the network device, the terminal device, and interaction between the network device and the terminal device. To implement functions in the methods provided in embodiments of this application, the network device and the terminal device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on specific applications and design constraints of the technical solutions.

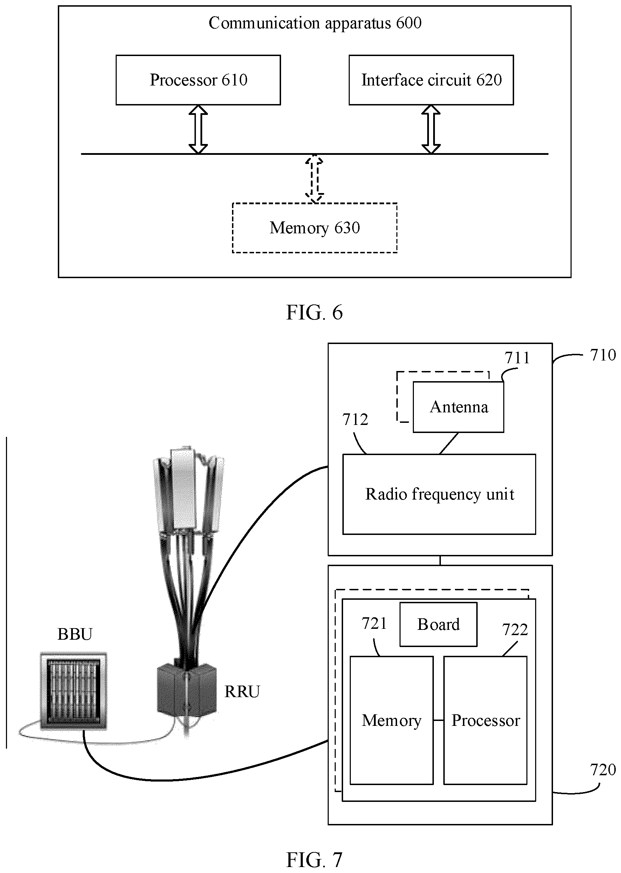

FIG. 5 and FIG. 6 are diagrams of structures of possible communication apparatuses according to embodiments of this application. The communication apparatuses may implement the functions of the terminal device or the network device in the foregoing method embodiments. Therefore, beneficial effect of the foregoing method embodiments can also be implemented. In embodiments of this application, the communication apparatus may be the terminal device 103 shown in FIG. 1, the network device 101 shown in FIG. 1, or a module (for example, a chip) used in the terminal device or the network device.

As shown in FIG. 5, a communication apparatus 500 includes a transceiver module 501 and a processing module 502. The communication apparatus 500 may be configured to implement a function of the terminal device in the method embodiment shown in FIG. 2A.

When the communication apparatus 500 is configured to implement the function of the terminal device 103 in the method embodiment in FIG. 2A, the processing module 502 is configured to determine, based on a first threshold 210, a transmission quantity request for an acknowledgment message of a message 4; and the transceiver module 501 is configured to receive the first threshold 210, and send the transmission quantity request 215 for the acknowledgment message of the message 4.

When the communication apparatus 500 is configured to implement the function of the network device 101 in the method embodiment in FIG. 2A, the processing module 502 is configured to determine a first threshold 210; and the transceiver module 601 is configured to send the first threshold 210, and receive a transmission quantity request 215 for an acknowledgment message of a message 4.

For more detailed descriptions of the transceiver module 501 and the processing module 502, refer to related descriptions in the foregoing method embodiments. Details are not described herein again.

As shown in FIG. 6, a communication apparatus 600 includes a processor 610 and an interface circuit 620. The processor 610 and the interface circuit 620 are coupled to each other. It may be understood that the interface circuit 620 may be a transceiver or an input/output interface. Optionally, the communication apparatus 700 may further include a memory 630, configured to store instructions executed by the processor 610, store input data required by the processor 610 to run the instructions, or store data generated after the processor 610 runs the instructions. Optionally, the processor 610 and the memory 630 may be integrated into a system on a chip SOC like a chip, or another integrated apparatus. Optionally, the interface circuit 620 may also be integrated into a system on chip SOC like a chip, or another integrated apparatus.

When the communication apparatus 600 is configured to implement the methods in the foregoing method embodiments, the processor 610 is configured to perform a function of the foregoing processing module 502, and the interface circuit 620 is configured to perform a function of the foregoing transceiver module 501.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements a function of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

When the apparatus in embodiments of this application is a network device, the apparatus may be shown in FIG. 7 The apparatus may include one or more radio frequency units, for example, a remote radio unit (remote radio unit, RRU) 710 and one or more baseband units (baseband units, BBU) (which may also be referred to as a digital unit (digital unit, DU)) 720. The RRU 710 may be referred to as a transceiver module. The transceiver module may include a sending module and a receiving module, or the transceiver module may be a module that can implement sending and receiving functions. The transceiver module may correspond to the transceiver module 501 shown in FIG. 5, that is, may perform an action performed by the transceiver module 501. Optionally, the transceiver module may also be referred to as a transceiver machine, a transceiver circuit, a transceiver, or the like, and may include at least one antenna 711 and a radio frequency unit 712. The RRU 710 is mainly configured to: receive and send a radio frequency signal, and perform conversion between a radio frequency signal and a baseband signal. The BBU 710 is mainly configured to: perform baseband processing, control a network device, and the like. The RRU 710 and the BBU 720 may be physically disposed together, or may be physically disposed separately, namely, a distributed base station.

The BBU 720 is a control center of the base station, may also be referred to as a processing module, may correspond to the processing module 502 shown in FIG. 5, and is mainly configured to complete a baseband processing function, for example, channel coding, multiplexing, modulation, and spectrum spreading. In addition, the processing module may perform an action performed by the processing module 702. For example, the BBU (the processing module) may be configured to control the base station to perform an operation procedure related to the network device in the foregoing method embodiments.

In an example, the BBU 720 may include one or more boards, and a plurality of boards may jointly support a radio access network (for example, an LTE network) of a single access standard, or may separately support radio access networks (for example, an LTE network, a 5G network, or another network) of different access standards. The BBU 720 further includes a memory 721 and a processor 722. The memory 721 is configured to store necessary instructions and data. The processor 722 is configured to control the base station to perform a necessary action, for example, configured to control the base station to perform the operation procedure related to the network device in the foregoing method embodiments. The memory 721 and the processor 722 may serve the one or more boards. In other words, a memory and a processor may be disposed on each board. Alternatively, a plurality of boards may share a same memory and a same processor. In addition, a necessary circuit may further be disposed on each board.

An embodiment of this application provides a communication system. The communication system may include the terminal device in the embodiment shown in FIG. 2A, and include the network device in the embodiment shown in FIG. 2A. Optionally, the terminal device and the network device in the communication system may perform the communication method shown in FIG. 2A.

An embodiment of this application further provides a circuit. The circuit may be coupled to a memory, and may be configured to perform a procedure related to the terminal device or the network device in any one of the foregoing method embodiments. The chip system may include the chip, and may further include another component like a memory or a transceiver.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, or the processor may be any conventional processor, or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In combination with the examples described in embodiments disclosed in this specification, modules and algorithm steps may be implemented by electronic hardware or a combination of computer software and electronic hardware. Whether the functions are performed in a hardware or software manner depends on particular applications and design constraint conditions of the technical solutions. A person skilled in the art may use different methods to implement the described functions for each particular application, but it should not be considered that the implementation goes beyond the scope of this application.

It may be clearly understood that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed communication method and apparatus may be implemented in another manner. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The modules described as separate components may or may not be physically separate, and components displayed as modules may or may not be physical modules, that is, may be located in one place or may be distributed over a plurality of network units. Some or all of the units may be selected based on an actual requirement to achieve the objectives of the solutions of embodiments.

In addition, functional modules in embodiments of this application may be integrated into one processing module, or each of the modules may exist alone physically, or two or more modules are integrated into one module.

When the functions are implemented in the form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing computer-readable storage medium may be any usable medium that can be accessed by a computer. The following provides an example but does not impose a limitation: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, or another optical disc storage or a disk storage medium, or another magnetic storage device, or any other medium that can carry or store expected program code in a form of an instruction or a data structure and can be accessed by a computer.

As used in this specification, the term "include" and similar terms should be understood as open inclusion, that is, "include but not limited to". The term "based on" should be understood as "at least partially based on". The term "one embodiment" or "this embodiment" should be understood as "at least one embodiment". Terms such as "first", "second", and the like may indicate different objects or a same object, and are merely used to distinguish between indicated objects, but do not imply a specific spatial order, a time order, an importance order, or the like of the indicated objects. In some embodiments, a value, a process, a selected item, a determined item, a device, an apparatus, a means, a part, a component, or the like is referred to as "optimal", "lowest", "highest", "minimum", "maximum", or the like. It should be understood that such a description is intended to indicate that a selection may be made among many available functional selections, and that such a selection does not need to be better, lower, higher, smaller, larger, or otherwise preferred than other selections in other aspects or in all aspects. As used in this specification, the term "determining" may cover a variety of actions. For example, "determining" may include operating, calculation, processing, export, investigation, lookup (for example, lookup in a table, database, or another data structure), finding, and the like. In addition, "determining" may include receiving (for example, receiving information), accessing (for example, accessing data in a memory), and the like. In addition, "determining" may include parsing, selection, choice, establishment, and the like.

The foregoing descriptions are merely specific implementations of this application, and are not intended to limit the protection scope of embodiments of this application. Any variation or replacement that a person skilled in the art can easily figure out within the technical scope disclosed in embodiments of this application shall fall within the protection scope of embodiments of this application. Therefore, the protection scope of embodiments of this application should be subject to the protection scope of the claims.

## Claims

1. A communication method, comprising:
receiving, by a first communication apparatus, a first threshold, wherein the first threshold is used to determine whether acknowledgment information of a message 4 (Msg4) in a random access procedure between the first communication apparatus and a second communication apparatus is repeatedly transmitted; and
performing, by the first communication apparatus, the random access procedure based on the first threshold.

2. The method according to claim 1, wherein
the first threshold is less than a second threshold, and the second threshold is used to determine whether a message 3 (Msg3) in the random access procedure is repeatedly transmitted.

3. The method according to claim 1 or 2, wherein the performing the random access procedure comprises:
receiving, by the first communication apparatus from the second communication apparatus, a transmission quantity request mode used for the acknowledgment information of the message 4; and
sending, by the first communication apparatus based on the first threshold and the transmission quantity request mode, a transmission quantity request for the acknowledgment information of the message 4.

4. The method according to claim 3, wherein the transmission quantity request mode comprises at least one of the following:
sending a preconfigured preamble sequence;
scrambling the message 3 by using a preconfigured scrambling code; or
performing indication in the message 3.

5. The method according to claim 4, wherein the transmission quantity request mode is the sending the preconfigured preamble sequence, and the sending a transmission quantity request for the acknowledgment information of the message 4 comprises:
selecting, by the first communication apparatus based on the first threshold, a preamble sequence from a preamble sequence set indicating repetition of both the message 3 and the acknowledgment information of the message 4; and
sending, by the first communication apparatus, the selected preamble sequence.

6. The method according to claim 5, wherein the preamble sequence set indicating repetition of both the message 3 and the acknowledgment information of the message 4 is any one of the following:
a part of a preamble sequence set for repetition of the message 3; and
a part of a reserved preamble sequence resource that does not overlap the preamble sequence set indicating repetition of the message 3.

7. The method according to claim 4, wherein the transmission quantity request mode is the scrambling the message 3 by using the preconfigured scrambling code, and the sending a transmission quantity request for the acknowledgment information of the message 4 comprises:
selecting, by the first communication apparatus based on the first threshold, one of a plurality of scrambling codes to scramble the message 3; and
sending, by the first communication apparatus, a scrambled message 3.

8. The method according to claim 4, wherein the transmission quantity request mode is the performing indication in the message 3, and the sending a transmission quantity request for the acknowledgment information of the message 4 comprises:
sending, by the first communication apparatus in the message 3 based on the first threshold, the transmission quantity request for the acknowledgment information of the message 4.

9. The method according to claim 8, wherein the transmission quantity request for the acknowledgment information of the message 4 comprises at least one of the following:
a repetition quantity of the acknowledgment information of the message 4; or
a scaling factor of a repetition quantity of the acknowledgment information of the message 4 relative to a repetition quantity of the message 3.

10. The method according to claim 4 or 7, wherein the sending a transmission quantity request for the acknowledgment information of the message 4 further comprises:
selecting, by the first communication apparatus based on the first threshold, a preamble sequence from a preamble sequence set indicating repetition of both the message 3 and the acknowledgment information of the message 4;
sending, by the first communication apparatus, the selected preamble sequence;
selecting, by the first communication apparatus, the one of the plurality of scrambling codes to scramble the message 3; and
sending, by the first communication apparatus, the scrambled message 3.

11. The method according to any one of claims 3 to 10, wherein the performing the random access procedure further comprises:
receiving, by the first communication apparatus, a transmission quantity indication of the acknowledgment information of the message 4 from the second communication apparatus.

12. The method according to claim 11, wherein the receiving a transmission quantity indication of the acknowledgment information of the message 4 comprises at least one of the following:
receiving, by the first communication apparatus from the message 4, the transmission quantity indication of the acknowledgment information of the message 4;
receiving, by the first communication apparatus, the transmission quantity indication of the acknowledgment information of the message 4 from downlink control information for scheduling the message 4;
receiving, by the first communication apparatus via radio resource control RRC, a group of repetition transmission quantities of the acknowledgment information of the message 4, and receiving, from downlink control information for scheduling the message 4, an index of the repetition quantities as the transmission quantity indication of the acknowledgment information of the message 4; or
receiving, by the first communication apparatus, the transmission quantity indication of the acknowledgment information of the message 4 from downlink control information for scheduling the message 3.

13. The method according to claim 11 or 12, wherein the transmission quantity indication of the acknowledgment information of the message 4 comprises at least one of the following:
the repetition quantity of the acknowledgment information of the message 4;
an offset of the repetition quantity of the acknowledgment information of the message 4 relative to the repetition quantity of the message 3;
the scaling factor of the repetition quantity of the acknowledgment information of the message 4 relative to the repetition quantity of the message 3; or
a table index comprising the repetition quantity of the acknowledgment information of the message 4 and the repetition quantity of the message 3.

14. A communication method, comprising:
determining, by a second communication apparatus, a first threshold, wherein the first threshold is used to determine whether acknowledgment information of a message 4 (Msg4) in the random access procedure is repeatedly transmitted; and
sending, by the second communication apparatus, the first threshold to the first communication apparatus.

15. The method according to claim 14, wherein
the first threshold is less than a second threshold, and the second threshold is used to determine whether a message 3 (Msg3) in the random access procedure is repeatedly transmitted.

16. The method according to claim 14 or 15, further comprising:
sending, by the second communication apparatus to the first communication apparatus, a transmission quantity request mode used for the acknowledgment information of the message 4; and
receiving, by the second communication apparatus from the first communication apparatus based on the transmission quantity request mode, a transmission quantity request for the acknowledgment information of the message 4.

17. The method according to claim 16, wherein the transmission quantity request mode comprises at least one of the following:
sending a preconfigured preamble sequence;
scrambling the message 3 by using a preconfigured scrambling code; or
performing indication in the message 3.

18. The method according to claim 17, wherein the transmission quantity request mode is the sending the preconfigured preamble sequence, and the receiving a transmission quantity request for the acknowledgment information of the message 4 comprises:
receiving, by the second communication apparatus from the preamble sequence, the transmission quantity request for the acknowledgment information of the message 4.

19. The method according to claim 17, wherein the transmission quantity request mode is the scrambling the message 3 by using the preconfigured scrambling code, and the receiving a transmission quantity request for the acknowledgment information of the message 4 comprises:
descrambling, by the second communication apparatus, a received message 3, to obtain the transmission quantity request for the acknowledgment information of the message 4.

20. The method according to claim 17, wherein the transmission quantity request mode is the performing indication in the message 3, and the receiving a transmission quantity request for the acknowledgment information of the message 4 comprises:
receiving, by the second communication apparatus from the message 3, the transmission quantity request for the acknowledgment information of the message 4.

21. The method according to claim 20, wherein the transmission quantity request for the acknowledgment information of the message 4 comprises at least one of the following:
a repetition quantity of the acknowledgment information of the message 4; or
a scaling factor of a repetition quantity of the acknowledgment information of the message 4 relative to a repetition quantity of the message 3.

22. The method according to claim 17 or 19, wherein the receiving a transmission quantity request for the acknowledgment information of the message 4 further comprises:
receiving, by the second communication apparatus from the preamble sequence, the transmission quantity request for the acknowledgment information of the message 4; and
descrambling, by the second communication apparatus, the received message 3, to obtain the transmission quantity request for the acknowledgment information of the message 4 for correction.

23. The method according to any one of claims 16 to 22, further comprising:
sending, by the second communication apparatus, a transmission quantity indication of the acknowledgment information of the message 4 to the first communication apparatus based on the transmission quantity request for the acknowledgment information of the message 4.

24. The method according to claim 23, wherein the sending a transmission quantity indication of the acknowledgment information of the message 4 comprises at least one of the following:
sending, by the second communication apparatus via the message 4, the transmission quantity indication of the acknowledgment information of the message 4;
sending, by the second communication apparatus via downlink control information for scheduling the message 4, the transmission quantity indication of the acknowledgment information of the message 4;
sending, by the second communication apparatus via radio resource control RRC, a group of repetition transmission quantities of the acknowledgment information of the message 4, and sending, via downlink control information for scheduling the message 4, an index of the repetition quantities as the transmission quantity indication of the acknowledgment information of the message 4; or
sending, by the second communication apparatus, the transmission quantity indication of the acknowledgment information of the message 4 via downlink control information for scheduling the message 3.

25. The method according to claim 23 or 24, wherein the transmission quantity indication of the acknowledgment information of the message 4 comprises at least one of the following:
the repetition quantity of the acknowledgment information of the message 4;
an offset of the repetition quantity of the acknowledgment information of the message 4 relative to the repetition quantity of the message 3;
the scaling factor of the repetition quantity of the acknowledgment information of the message 4 relative to the repetition quantity of the message 3; or
a table index comprising the repetition quantity of the acknowledgment information of the message 4 and the repetition quantity of the message 3.

26. A terminal device, comprising a processor and a memory that stores instructions, wherein when the instructions are executed by the processor, the terminal device is enabled to perform the method according to any one of claims 1 to 13.

27. A network device, comprising a processor and a memory that stores instructions, wherein when the instructions are executed by the processor, the network device is enabled to perform the method according to any one of claims 14 to 25.

28. A computer-readable storage medium, wherein the computer-readable storage medium stores instructions, and when the instructions are executed by an electronic device, the electronic device is enabled to perform the method according to any one of claims 1 to 13 or any one of claims 14 to 25.

29. A computer program product, wherein the computer program product comprises instructions, and when the instructions are executed by an electronic device, the electronic device is enabled to perform the method according to any one of claims 1 to 13 or any one of claims 14 to 25.

30. A communication system, wherein the communication system comprises a first communication apparatus and a second communication apparatus;
the first communication apparatus comprises a processor and a memory that stores instructions, wherein when the instructions are executed by the processor, the terminal device is enabled to perform the method according to any one of claims 1 to 13; and
the second communication apparatus comprises a processor and a memory that stores instructions, wherein when the instructions are executed by the processor, the network device is enabled to perform the method according to any one of claims 14 to 25.
